# EUROPÄISCHE PATENTSCHRIFT

(11) **EP 1 802 519 B1**
(45) Veröffentlichungstag und Bekanntmachung des Hinweises auf die Patenterteilung: **23.07.2008**
(21) Anmeldenummer: 05792622.2
(22) Anmeldetag: 28.09.2005
(51) Int. Cl.: B62M 3/08, A43B 5/14

(54) **MAGNETISCHE KRAFTSCHLUSSVERBINDUNG ZWISCHEN EINEM FAHRRADPEDAL UND DEM SCHUH EINES RADFAHRERS**
MAGNETIC NON-POSITIVE CONNECTION BETWEEN A BICYCLE PEDAL AND THE SHOE OF A CYCLIST
ASSEMBLAGE PAR LIAISON DE FORCE MAGNETIQUE ENTRE UNE PEDALE DE BICYCLETTE ET LA CHAUSSURE D'UN CYCLISTE

(30) Priorität: 18.10.2004 DE 102004050664
(43) Veröffentlichungstag der Anmeldung: 04.07.2007
(73) Patentinhaber: Dürr, Wolfgang, 81677 München (DE)
(72) Erfinder: SADLER, Norbert, 85540 Haar (DE); DÜRR, Wolfgang, 81677 München (DE)
(86) Internationale Anmeldenummer: PCT/EP2005/010453
(87) Internationale Veröffentlichungsnummer: WO 2006/042622

(56) Entgegenhaltungen:
- FR-A- 2 726 745
- US-A- 5 473 963
- US-A- 5 704 256
- PATENT ABSTRACTS OF JAPAN Bd. 016, Nr. 034 (M-1204), 28. Januar 1992 (1992-01-28) & JP 03 243488 A (SHIMANO IND CO LTD), 30. Oktober 1991 (1991-10-30) in der Anmeldung erwähnt

## Beschreibung

Magnetische Kraftschluss verbindungen zwischen einem Fahrradpedal und dem Schuh eines Radfahrers sind bekannt.

Diese Vorrichtungen bestehen in der Regel aus den starr und unbeweglich in das Pedal eingebrachten und fixierten Permanentmagnetelementen und einem in der Laufsohle des Fahrradschuhes integrierten oder aus der Laufsohle ausgeformten , die Permanentmagnete formschlüssig adaptierenden ferromagnetischen Weicheisenformteil oder aus geeigneten Polmagnetanordnungen.

So beansprucht JP-3243488 A eine solche magnetische Kraftschlussverbindungsvorrichtung, bei der die im Kraftschlussbereich nicht ebenen und nicht planaren Permanentmagnetelemente starr und unbeweglich in dem Pedal integriert oder hierin eingebracht sind, und dieses Pedal seinerseits über ein in der Schuhsohle eingebrachten oder aus ihr ausgeformten formschlüssigen Weicheisenformteil den magnetischen Feldlinienkraftschluss formschlüssig gewährleistet.

Des weiteren werden in EP 0792111B1, DE 0694 07 279 T 2, in IT 1263422 ebenso starr und unbeweglich in das Pedal eingebrachte oder auf dem Pedal fixierte, nicht ebene Permanentmagnetelemente in Verbindung mit einem formschlüssigen, ferromagnetischen Weicheisenformteil in der Schuhsohle beansprucht.

Dem Gegenstand der Anmeldung kommt das Dokument US 5 704 256 am nächsten.

Diese Anmeldung beansprucht ein speziell konstruiertes Fahrradpedal gemäß dem Oberbegriff von Anspruch 1 mit rampenhaften Permanentmagneten und ein auf diese speziellen Magnete adaptierendes feromagnetisches Element oder eine magnetische Polanordnung in einem speziellen Fahrradschuh. Die Trennung des Schuhs vom Pedal erfolgt durch Vergrößerung des Luftspaltes bei relativer Drehbewegung der rampenhaften Magnetelemente gegeneinander.

Der Gegenstand des Anspruchs 1 der vorliegenden Anmeldung beansprucht hingegen kein Sonderpedal und keinen Sonderfahrradschuh. Der Gegenstand der vorliegenden Erfindung kann durch Umrüsten und Nachrüsten der herkömmlichen, zum Stand der Technik gehörenden Fahrradpedale und der Fahrradschuhe des SPD® - Systems realisiert werden. Die ebenen, beweglich gelagerten, nachstellbaren und austauschbaren Permanentmagnete erlauben zudem eine uneingeschränkte Relativbewegung zwischen dem Fahrradschuh und dem Pedal ohne Einleitung der Trennung, eine Adaption der Magnete an unterschiedliche Laufsohlenprofile und die Einstellung einer definierten Haftkraft und Abrisskraft.

Aufgabe der Erfindung ist es, eine nach allen Richtungen sofort lösbare und trennbare, bei physisch noch zulässigem und einstellbaren Trennkraftmaximum, magnetische Kraftschlussverbindungsvorrichtung zwischen einem Fahrradpedal und dem Schuh eines Radfahrers zu realisieren, bei der im Bereich der Pedaltrittfläche jederzeit eine uneingeschränkte Relativbewegung, insbesondere in der Drehung, zwischen dem Pedal und dem Schuh des Radfahrers möglich ist, ohne einen ungewollten Abriss der Kraftschlussverbindung einzuleiten, und eine automatische, ständige, optimale Anpassung der Hubhöhe der Magnetelemente an das, in die Laufsohle der zum Stand der Technik gehörenden Fahrradschuhe, insbesondere des SPD®-Systems, in der Regel unterschiedlich versenkt eingebrachte oder aufgebrachte ferromagnetische Kraftschlusselement zu realisieren oder dieses ferromagnetische Kraftschlusselement auf die Laufsohle fester Schuhe jeglicher Art einzubringen oder aufzubringen und die Trittsicherheit der unterschiedlichen Laufsohlenprofile zu gewährleisten, sowie durch Austausch und Wahl der Magnete eine definierte Haftkraft zu erlangen.

Die Aufgabe wird mit den im Anspruch 1 genannten Vorrichtungsmerkmalen gelöst. In den Unteransprüchen werden beispielhaft weitere technische Ausgestaltungen der Erfindung beansprucht.

Der beanspruchte Gegenstand der Erfindung betrifft die in dem Fahrradpedal beweglich gelagerten oder einstellbar fixierten, beziehungsweise nachrüstbaren, an der Kraftkontaktfläche eben und planar ausgeformten Permanentmagnetelemente und das an der Kraftkontaktfläche ebene ferromagnetische , weichmagnetische Kraftschlusselement.

Der Gegenstand der Erfindung kann einerseits bereits bei der Herstellung der Pedale und der Fahrradschuhe im Sinne einer Neukonstruktion und Auslegung integriert werden, oder der Gegenstand der Erfindung kann andererseits über die beanspruchten Befestigungs- und Lagervorrichtungen an den zum Stand der Technik gehörenden Pedale, und an den zum Stand der Technik gehörenden Fahrradschuhen, insbesondere des SPD®-Systems und fester Schuhe jeglicher Art nachrüstbar, anbringbar oder aufbringbar sein.

Die Beweglichkeit der Permanentmagnetelemente ist erforderlich, um das Erreichen des kritischen Dreh- und Kippmomentes zwischen den zugkraftbelasteten Permanentmagnetelementen und dem Pedal zu minimieren und damit die Einleitung einer ungewollten Trennung weitgehend zu verhindern, sowie die freie Translationsbewegung und Anpassung der ebenen Permanentmagnetelemente in Richtung des in der Laufsohle versenkt eingebrachten ebenen weichmagnetischen, ferromagnetischen Kraftschlusselementes zu gewährleisten und deren Hubhöhe individuell und automatisch auf die unterschiedliche Tiefe des in der Regel leicht konvex ausgeformten Sohlenprofils der Fahrradschuhe einzustellen, sowie durch die Möglichkeit des Absenkens der ebenen Magnetelemente im Pedal die Trittsicherheit des Radfahrers zu gewährleisten. Das mit dem Gegenstand der Erfindung ausgestattete Pedal erlaubt die Nutzung aller Schuhprofile und die Gehfähigkeit des Fahrradschuhs wird aufgrund des versenkten Einbaus der Kraftschlusselementes nicht wesentlich eingeschränkt.

Eine unbewegliche, starre Fixierung der ebenen Permanentmagnete in der Pedaltrittfläche erfüllt die gestellte Aufgabe nur eingeschränkt. Sie erfordert eine höhere Magnetkraft , Materialgewicht und Kosten zur Erreichung der Stärke des gewünschten Kraftschlusses und führt u. U. zu einem unbeabsichtigten Abriss der Kraftschlussverbindung. Die diskrete Einstellbarkeit und Regulierbarkeit der Hubhöhe der ebenen , starr fixierten Permanentmagnetelemente auf das individuelle Sohlenprofil der Fahrradschuhe und des versenkt eingebrachten, ebenen ferromagnetischen Kraftschlusselementes kann durch geeignete, in der Regel nichtmagnetische, polymere oder federbelastete Unterlegematerialien erreicht werden. Bei Trittbelastung müssen die Permanentmagnetelemente abgesenkt werden können, um die Trittsicherheit zu gewährleisten.

Die Haftkraft wird durch die Energiedichte, Abmessungen und Anzahl der Permanentmagnete sowie durch Abmessungen und Materialart des weichmagnetischen Kraftschlusselementes bestimmt. Durch die Auswahl und den Austausch der Permanentmagnete kann eine individuelle Haftkraft eingestellt werden

Das kontrollierte Lösen der magnetischen Kraftschlussverbindung ist in beliebiger Richtung möglich und wird in der Regel durch seitliches Abkippen des Schuhs bei Überschreitung eines kritischen, einstellbaren Kippmomentes erreicht.

Durch die Möglichkeit der Wahl eines Maximalwertes der magnetischen Haftkraft, im Bereich von 20 kp bis 30 kp, der das individuelle Körpergewicht und die Bein- und Fußkraft des Radfahrers berücksichtigt, ist ein verletzungsfreies Lösen der Kraftschlussverbindung in Not-und Unfallsituationen gewährleistet

Die relativ starke Magnetkraft und Energiedichte der Permanentmagnetelemente hat zudem einen therapeutischen Einfluß auf die Aufnahmefähigkeit von Sauerstoff durch das eisenhaltige Hämoglobin des Blutes, und führt zu einer individuellen Leistungssteigerung des Radfahrers.

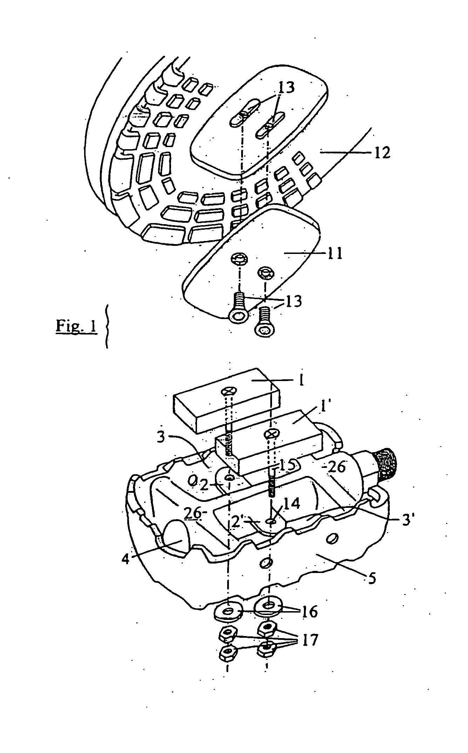

In den Figuren 1-11 wird der Gegenstand der Erfindung und weitere technische Ausgestaltungen, entsprechend der Unteransprüche, beispielhaft dargestellt.

Eine Kombination der in den Unteransprüchen dargestellten technischen Ausgestaltungen ist möglich, dies insbesondere bei der konstruktiven Neuauslegung der Pedale und der Fahrradschuhe zur Aufnahme, Einbringung und Nachrüstung der gegenständlichen Erfindung.

### Liste der Figuren:

Fig. 1 zeigt den Gegenstand der Erfindung in Form einer beiderseits an der Pedalachse symmetrisch angebrachten Einpunktlochlagerung für die Aufnahme der beweglichen, ebenen Magnetelemente.
Fig. 2 zeigt die Einpunktlochlagerung entsprechend Fig. 1, nachgerüstet über die genormten Befestigungsbohrungen der Reflektoren des Pedals.
Fig. 3 zeigt eine um die Pedalachse beiderseits beweglich geführte und fixierte EinpunktLochlagerung in Form einer gekröpften Schelle.
Fig. 4 zeigt eine beiderseits der Achse in den Querstegen des Pedals konstruktiv vorgesehene Langlochlagerung für die bewegliche Aufnahme der Magnet-Befestigungselemente und der Permanentmagnetelemente.
Fig. 5 zeigt eine über die genormte Befestigung der Reflektoren des Pedals nachrüstbare Langlochlagerung für die bewegliche Aufnahme und Lagerung der Permanentmagnete.
Fig. 6 zeigt eine nachrüstbare Ausführung einer beweglichen Lagerung mittels eines Gurtbandes.
Fig. 7 zeigt den Gegenstand der Erfindung in Form einer diskret höhenverstellbaren, jedoch starren Fixierung der Permanentmagnete.
Fig. 8 zeigt das in die Fahrradschuhe des SPD®- Systems einbringbare Kraftschlusselement in Form einer ebenen Weicheisenplatte.
Fig. 9 zeigt das Kraftschlusselement entsprechend Fig. 8 in Form einer einseitig mit einem Laufsohlenbelag beschichteten ferromagnetischen Abdeckplatte für die zum Stand der Technik gehörenden Fahrradschuhe des SPD®-Systems.
Fig. 10 zeigt eine Fixierplatte und Adapterplatte für die Befestigung an Rennradschuhen.
Fig. 11 zeigt das Kraftschlußelement entsprechend Fig. 8 , aufbringbar mittels Fixierplatte und Klettband und/oder Schnallenverschlüsse auf Sportschuhe und feste Schuhe jeglicher Art.

### Beschreibung der Figuren:

Fig. 1 zeigt den Gegenstand der Erfindung, bestehend aus den in den offenen Bereichen (3,3'), beiderseits und symmetrisch am Achsrohr (4) ausgeformten oder angebrachten antimagnetischen Halte-Lager- und Führungsvorrichtungen (2,2') mit kegelförmiger Übermaßbohrung (14) und den über diese Bohrung (14) beweglich eingebrachten und über die Schraubverbindungen (15) nachstellbaren, austauschbaren und beweglich gelagerten ebenen Permanentmagnetelemente (1,1'), sowie die weichmagnetischen Rückholelemente (16) oder Elastomere oder Federelemente mit der Fixier- und Konterverschraubung (17), und das über die genormte Schraubverbindung (13) in die zum Stand zum Technik gehörenden Fahrrad-schuhe (12) einbringbare weichmagnetische Kraftschlusselement (11).

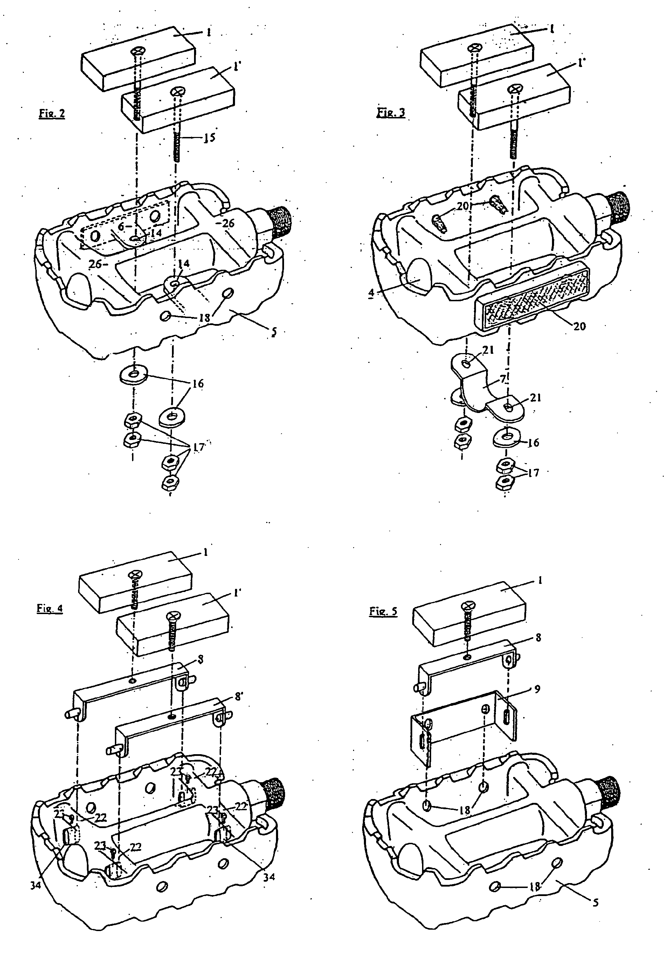

Fig. 2 zeigt eine über die genormte Reflektorbefestigung (18), beidseitig an der Innenwandung (5) des Pedals angebrachte, oder aus diesem Bereich (5) ausgeformte antimagnetische Einpunktlagerung (6) mit kegelförmiger Übermaßbohrung (14) zur Aufnahme und beweglichen Lagerung der ebenen Permanentmagnetelemente (1,1') sowie die weichmagnetischen Rückholelemente (16) mit der Fixier- und Konterverschraubung (17).

Fig.3 zeigt eine nachrüstbare Langloch-Einpunktlagerung in Form einer gekröpften Schelle (7) mit den beiden Langloch-Übermaßbohrungen (21), angebracht an der Unterseite des Pedalachsrohres (4) und fixiert über die Schraub-oder Steckverbindungen der Reflektoren (20), zur Aufnahme, Austausch und beweglichen Lagerung der ebenen Permanentmagnetelemente (1,1') sowie die weichmagnetischen Rückholelemente (16) mit der Fixier-und Konterverschraubung (17).

Fig. 4 zeigt eine in den Querstegen (22) des Pedals integrierte Langlochlagerung (34) zur beweglichen Aufnahme und Austausch der Lager- und Befestigungselemente (8,8') mit den ebenen Permanentmagnetelementen (1,1') und der Hubhöhenregulierung (23).

Fig. 5 zeigt eine über die genormte Reflektorbefestigung (18) nachrüstbare Langlochlagerung (9,8) zur beweglichen Aufnahme und Austausch der ebenen Permanentmagnetelemente (1,1').

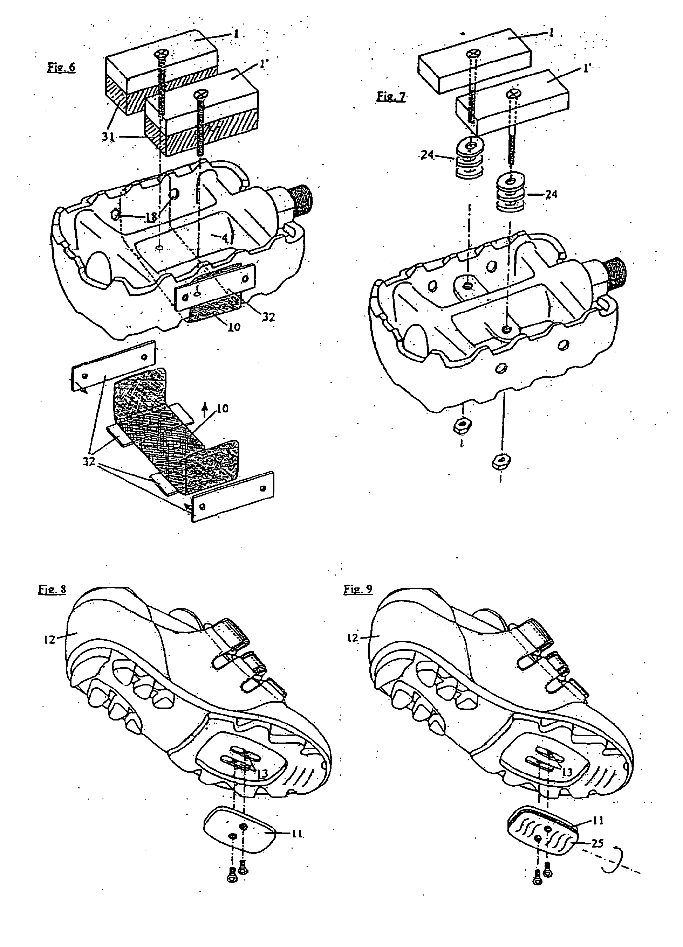

Fig. 6 zeigt eine nachrüstbare, bewegliche Lagerung und Fixierung der ebenen Permanentmagnetelemente (1,1') in Form eines unterhalb des Pedalachsrohres (4) und der Pedalunterseite straff geführten Gewebegurtbandes (10) und Klemmmittel (32) und Distanzkörper (31).

Fig. 7 zeigt eine feste Fixierung der ebenen Permanentmagnetelemente (1,1') mit diskreter Hubhöheneinstellung durch polymere oder federbelastete Unterlegmaterialien (24).

Fig. 8 zeigt das weichmagnetische Kraftschlusselement (11), in den Abmaßen von ca. 70mm x 35mm x 4mm ; befestigt über die genormten Schraubverbindungen (13) der zum Stand der Technik gehörenden Fahrradschuhe (12) des SPD® -Systems.

Fig. 9 zeigt die Laufsohenabdeckplatte (25) einer Cleat-Schraubverbindung (13) des SPD®-Systems, auf der an der Unterseite eine weichmagnetische Kraftschlussplatte (11) aufvulkanisiert oder befestigt ist. Durch das Wenden dieser Abdeckplatte (25) kann die weichmagnetische Kraftschlussplatte (11) in Funktionsstellung gebracht werden.

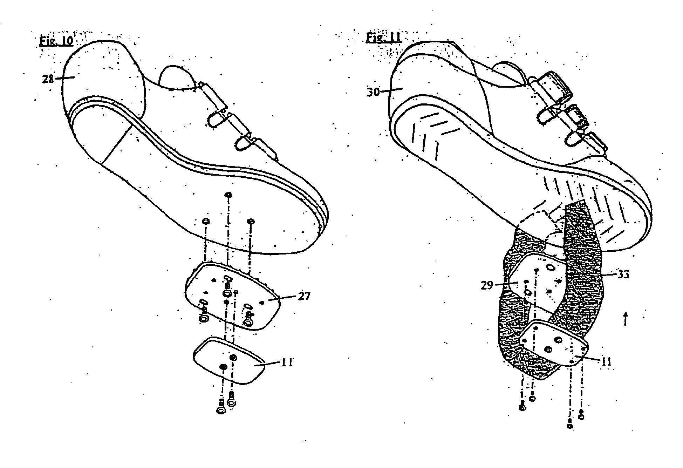

Fig. 10 zeigt das mittels einer Adapterplatte (27) an einem zum Stand der Technik gehörenden Rennradschuh (28) befestigte weichmagnetische Kraftschlusselement (11).

Fig. 11 zeigt das mittels eines Klettverschlussbandes (33) und einer Klemm-und Fixierplatte, hier in Form der Adapterplatte (29), auf Sportschuhe (30) und fester Schuhe jeglicher Art aufbringbare weichmagnetische Kraftschlusselement (11).

## Patentansprüche

1. Magnetische Kraftschlußverbindung mit einem Fahrradpedal und einem Schuh (12) eines Radfahrers, wobei das Fahrradpedal ein Pedalachsrohr (4) und Seitenwandungen (5) aufweist, die beiderseits symmetrisch des Pedalachsrohrs (4) angeordnet sind und jeweils einen offenen Bereich (3,3') zwischen ihnen und dem Pedalachsrohr (4) definieren, und die Vorrichtung ebene Permanentmagnetelemente (1,1') und mindestens ein ebenes, weichmagnetisches, dem jeweiligen Permanentmagnet zugeordnetes Kraftschlusselement (11) aufweist, wobei das Kraftschlusselement (11) in oder auf der Laufsohle eines zugehörigen Schuhs (12) integriert oder anbringbar ist, **dadurch gekennzeichnet, dass** die ebenen Permanentmagnetelemente (1,1') in den offenen Bereichen (3,3') mittels der in oder an dem Fahrradpedal konstruktiv vorgesehenen Lager-und Haltevorrichtungen (2,2',6,34) beweglich gelagert oder einstellbar fixiert sind, oder die Permanentmagnete (1,1') in diesen Bereichen über nachrüstbare Lager,- Halte- und Aufnahmevorrichtungen (6,7,8,9,10) an dem Fahrradpedal anbringbar und dabei beweglich gelagert und/oder nachstellbar angeordnet sind, und dass die Permanentmagnetelemente (1,1') mit dem Kraftschlusselement (11) in der Ebene der Pedaltrittfläche (26) zwischen dem Pedal und dem Fahrradschuh (12) einen flächigen, auf Zugkraft belastbaren Kraftschluss eingehen,
dabei in der Ebene der Pedaltrittfläche (26) zwischen dem Fahrradschuh (12) und dem Pedal eine uneingeschränkte Relativbewegung erlauben und durch eine über die Sicherheitsnormen definierte und individuell einstellbare Stärke der Kraftschlussverbindung mittels Austausch und Wahl der Permanentmagnetelemente (1,1') eine verletzungsfreie Trennung der magnetischen Kraftschlussverbindung bei Unfall-und Notsituationen gewährleistet wird.

2. Magnetische Kraftschlußverbindung nach Anspruch 1, **gekennzeichnet dadurch, dass** in den Querstegen (22) oder sonstiger am Pedal konstruktiv vorgesehener Aufnahme,-Führungs-und Haltevorrichtungen, Langlochlagerung (34), Hubhöhenregulierung (23) die ebenen Permanentmagnetelemente (1,1') beweglich, austauschbar und nachjustierbar in den offenen Bereichen (3,3') der Pedale angebracht sind.

3. Magnetische Kraftschlußverbindung nach Anspruch 1, **gekennzeichnet dadurch, dass** über die genormte Reflektorbefestigutig (18) an den Fahrradpedalen die Lager-und Haltevorrichtungen (6,7,8,9) nachrüstbar anbringbar sind.

4. Magnetische Kraftschlußverbindung nach Anspruch 1, **gekennzeichnet dadurch, dass** die bewegliche Lagerung der ebenen Permanentmagnetelemente (1,1') mittels eines über der Unterseite des Pedals straff gespannten Gurtbandes (10) erfolgt.

5. Magnetische Kraftschlußverbindung nach Anspruch 1, **gekennzeichnet dadurch, dass** die ebenen Permanentmagnetelemente (1,1') in den offenen Bereichen (3,3') des Pedals mittels polymerer oder federbelasteter Unterlegmaterialien (24) in der Hubhöhe diskret verstellbar, ansonsten jedoch beweglich oder auch unbeweglich eingebracht sind.

6. Magnetische Kraftschlußverbindung nach Anspruch 1, **gekennzeichnet dadurch, dass** das weichmagnetische Kraftschlusselement (11) über die genormte Schraubverbindung (13) der Fahrradschuhe von Systempedalen anbringbar und befestigt ist.

7. Magnetische Kraftschlußverbindung nach Anspruch 1, **gekennzeichnet dadurch, dass** das weichmagnetische Kraftschlusselement (11) in der Laufsohle von Fahrradschuhen und Sportschuhen fest integriert ist und durch Abnahme einer Sohlenabdeckung das weichmagnetische Kraftschlusselement (11) in Funktionsstellung gelangt.

8. Magnetische Kraftschlußverbindung nach Anspruch 1, **gekennzeichnet dadurch, dass** auf der Rückseite der Abdeckplatte (25) , der Fahrradschuhe (12), ein weichmagnetisches Kraftschlusselement(11) aufvulkanisiert oder befestigt ist, und das durch Wenden der Abdeckplatte (25) die Kraftschlussplatte (11) in Funktionsstellung gelangt.

9. Magnetische Kraftschlußverbindung nach Anspruch 1 **gekennzeichnet dadurch, dass** mittels einer Adapterplatte (27) das weichmagnetische Kraftschlusselement (11) auf Rennradschuhe (28) aufbringbar ist.

10. Magnetische Kraftschlußverbindung nach Anspruch 1, **gekennzeichnet dadurch, dass** das weichmagnetische Kraftschlusselement (11) mittels eines Gewebeklettgurtbandes (33) und der Adapterplatte (27) als Fixier- und Klemmelement auf Sportschuhe (30) und feste Schuhe jeder Art aufbringbar ist.

11. Magnetische Kraftschlußverbindung nach Anspruch 1, **gekennzeichnet dadurch, dass** die ebenen Permanentmagnetelemente (1,1') auf Grund der hohen magnetischen Energiedichte zusätzlich im Sinne einer therapeutischen Magnetfeldbehandlung generell für Radfahrer Anwendung findet.

## Claims

1. Magnetic non-positive connection system including a bicycle pedal and a shoe (12) of a cyclist, wherein the bicycle pedal includes a tubular pedal spindle (4) and lateral walls (5) which are arranged symmetrically on both sides of the tubular pedal spindle (4), and which each define an open portion (3, 3') between themselves and the tubular pedal spindle (4), and wherein the device includes planar permanent magnetic elements (1, 1') and at least one planar, soft magnetic non-positive connection element (11) in conjunction with the respective permanent magnet, wherein said non-positive connection element (11) is integrated into or attachable to the sole of an associated shoe (12), **characterised in that** the planar permanent magnetic elements (1, 1') are mounted movably or are fixed in an adjustable manner in the open portions (3, 3') by means of the accommodation and holding devices (2, 2', 6, 34) provided by design within or at the bicycle pedal, or **in that** the permanent magnets (1, 1') in these portions are attachable to the bicycle pedal using retrofit accommodation, holding, and locator devices (6, 7, 8, 9, 10) and at the same time are arranged in a movable and/or re-adjustable manner, and **in that** the permanent magnetic elements (1, 1') establish a surface-like, non-positive connection with the non-positive connection element (11) in the pedal contact plane (26) between the pedal and the cycling shoe (12), which can resist tensile stress,
while allowing an unrestricted relative movement between the cycling shoe (12) and the pedal in the pedal contact plane (26), and, via a strength of the non-positive connection system defined by the safety standards and individually adjustable by means of replacement and selection of the permanent magnetic elements (1, 1'), guaranteeing an injury-free separation of the magnetic non-positive connection system in case of accident or emergency situations.

2. Magnetic non-positive connection system according to claim 1, **characterised in that** in the transverse ribs (22) or in other locator, guidance, and holding devices, slotted bearing devices (34) or stroke height adjusting devices (23) provided by the pedal design, the planar permanent magnetic elements (1, 1') are attached in a movable, replaceable, and re-adjustable manner in the open portions (3, 3') of the pedals.

3. Magnetic non-positive connection system according to claim 1, **characterised in that** the accommodation and holding devices (6, 7, 8, 9) are retrofittably attachable to the bicycle pedals using the standardised reflector attachment (18).

4. Magnetic non-positive connection system according to claim 1, **characterised in that** the movable accommodation of the planar permanent magnetic elements (1, 1') is realised by means of a strap (10) tensioned tightly across the bottom side of the pedal.

5. Magnetic non-positive connection system according to claim 1, **characterised in that** the planar permanent magnetic elements (1, 1') are integrated in said open portions (3, 3') of the pedal by means of polymer or spring-loaded washer-type materials (24) such that they are discreetly adjustable in stroke height, but otherwise are mounted in a movable or else unmovable manner.

6. Magnetic non-positive connection system according to claim 1, **characterised in that** the soft magnetic non-positive connection element (11) is attachable and is fixed using the standardised threaded joints (13) of the cycling shoes of system pedals.

7. Magnetic non-positive connection system according to claim 1, **characterised in that** the soft-magnetic non-positive connection element (11) is firmly integrated into the sole of cycling shoes and sports shoes and **in that** the soft-magnetic non-positive connection element (11) is brought into its operating position by taking off a sole cover.

8. Magnetic non-positive connection system according to claim 1, **characterised in that** at the rear of the cover plate (25) of the cycling shoes (12), a soft-magnetic non-positive connection element (11) is applied by vulcanisation or attached thereto, and **in that** the non-positive connection plate (11) is brought into its operating position by turning the cover plate (25).

9. Magnetic non-positive connection system according to claim 1, **characterised in that** the soft-magnetic non-positive connection element (11) can be applied to racing bike shoes (28) by means of an adapter plate (27).

10. Magnetic non-positive connection system according to claim 1, **characterised in that** the soft-magnetic non-positive connection element (11) can be applied to sports shoes (30) and sturdy shoes of any kind by means of a Velcro-type fabric strap (33) and the adapter plate (27) used as a fixation and clamping element.

11. Magnetic non-positive connection system according to claim 1, **characterised in that**, in addition, the planar permanent magnetic elements (1, 1'), due to their high magnetic power density, are applied generally in the sense of a therapeutic magnetic field treatment for cyclists.

## Revendications

1. Assemblage magnétique à coopération de forces entre une pédale de bicyclette et une chaussure (12) d'un cycliste, la pédale de bicyclette comprenant un axe de pédale tubulaire (4) et des joues latérales (5) qui sont agencées sur les deux côtés et symétriquement par rapport à l'axe de pédale tubulaire (4) et qui définissent respectivement une région ouverte (3, 3') entre elles-mêmes et l'axe de pédale tubulaire (4), l'assemblage comprenant des éléments magnétiques permanents plans (1, 1') et au moins un élément magnétique doux plan à coopération de forces (11) associé à l'aimant permanent respectif, ledit élément à coopération de forces (11) étant intégré dans ou monté sur la semelle d'une chaussure associée (12), **caractérisé en ce que** les éléments magnétiques permanents plans (1, 1') sont montés mobiles ou fixés de façon réglable dans les régions ouvertes (3, 3') au moyen des dispositifs de montage et de maintien (2, 2', 6, 34) prévus par construction dans ou sur la pédale de bicyclette, ou **en ce que** les aimants permanents (1, 1') peuvent être montés dans ces régions via des dispositifs de montage, de maintien et de réception (6, 7, 8, 9, 10) à équiper a posteriori, et sont ici agencés mobiles et/ou reréglables, et **en ce que** les éléments magnétiques permanents (1, 1') établissent avec l'élément à coopération de forces (11) une coopération de forces en surface dans le plan de la surface de contact (26) entre la pédale et la chaussure (12) de cycliste, capable de résister à une force de traction,
en permettant ici un mouvement relatif sans restriction entre la chaussure (12) de cycliste et la pédale dans le plan de la surface de contact (26) de la pédale et, grâce à une intensité, définie par les normes de sécurité et réglable de façon individuelle, de la liaison de l'assemblage à coopération de forces par échange et par sélection des éléments magnétiques permanents (1, 1'), une séparation sans blessures de la liaison magnétique à coopération de forces est assurée dans les situations d'accident et d'urgence.

2. Assemblage magnétique à coopération de forces selon la revendication 1, **caractérisé en ce que** les éléments magnétiques permanents plans (1, 1') sont montés de façon mobile, interchangeables ou reréglables dans les régions ouvertes (3, 3') des pédales, dans les barrettes transversales (22) ou autres dispositifs de logement, de guidage et de maintien, montages à perçage oblong (34), ou dispositifs de régulation de hauteur de course (23) prévus de par la construction sur la pédale.

3. Assemblage magnétique à coopération de forces selon la revendication 1, **caractérisé en ce que** les dispositifs de montage et de maintien (6, 7, 8, 9) peuvent être montés a posteriori sur les pédales de bicyclette via les fixations normalisées (18) pour les réflecteurs.

4. Assemblage magnétique à coopération de forces selon la revendication 1, **caractérisé en ce que** le montage mobile des éléments magnétiques permanents plans (1, 1') à lieu au moyen d'une sangle (10) tendue sur la face inférieure de la pédale.

5. Assemblage magnétique à coopération de forces selon la revendication 1, **caractérisé en ce que** les éléments magnétiques permanents plans (1, 1') sont incorporés dans les régions ouvertes (3, 3') de la pédale au moyen de matériaux de doublage en polymère ou sollicités par ressort (24), de manière réglable discrètement quant à la hauteur de course, mais par ailleurs mobiles ou non mobiles.

6. Assemblage magnétique à coopération de forces selon la revendication 1, **caractérisé en ce que** l'élément magnétique doux à coopération de forces (11) peut être monté et fixé via la liaison à vis normalisée (13) des chaussures de bicyclette associées à des pédales automatiques.

7. Assemblage magnétique à coopération de forces selon la revendication 1, **caractérisé en ce que** l'élément magnétique doux à coopération de forces (11) est fermement intégré dans la semelle de chaussures de cycliste et de chaussures de sport, et l'élément magnétique doux à coopération de forces (11) parvient en position fonctionnelle par enlèvement d'un recouvrement de la semelle.

8. Assemblage magnétique à coopération de forces selon la revendication 1, **caractérisé en ce qu'**un élément magnétique doux à coopération de forces (11) est appliqué par vulcanisation ou fixé sur la face postérieure de la plaque de recouvrement (25) de la chaussure de bicyclette (12), et **en ce que** la plaque à coopération de forces (11) parvient en position fonctionnelle par retournement de la plaque de recouvrement (25).

9. Assemblage magnétique à coopération de forces selon la revendication 1, **caractérisé en ce que** l'élément magnétique doux à coopération de forces (11) peut être monté sur des chaussures cyclistes de course (28) au moyen d'une plaque d'adaptation (27).

10. Assemblage magnétique à coopération de forces selon la revendication 1, **caractérisé en ce que** l'élément magnétique doux à coopération de forces (11) peut être monté, au moyen d'une sangle textile à fixation agrippante (33) et la plaque d'adaptation (10), à titre d'élément de fixation et de serrage, sur des chaussures de sport (30) et des chaussures rigides de toutes sortes.

11. Assemblage magnétique à coopération de forces selon la revendication 1, **caractérisé en ce que** les éléments magnétiques permanents plans (1, 1') sont applicables, en raison de la densité d'énergie magnétique élevée, additionnellement généralement pour des cyclistes dans le sens d'un traitement thérapeutique par champ magnétique.
